# EUROPEAN PATENT APPLICATION

(11) **EP 2 822 020 A1**
(43) Date of publication of application: **07.01.2015**
(21) Application number: 13425093.5
(22) Date of filing: 01.07.2013
(51) Int. Cl.: H01J 37/00, B01J 19/12, B01J 19/08

(54) **Apparatus for the treatment of materials and related method**

(71) Applicant: EDIL NATURA s.r.l., 28100 Novara NO (IT)
(72) Inventor: Limardo, Nicola, 28100 Novara (IT)
(74) Representative: Rausa, Mario Alberto Manlio

(57) **Abstract**

An apparatus for the treatment of a material (10) is described, comprising a processing chamber (1) insulated from the external electromagnetic fields and from natural radiations. The processing chamber comprises therein:
- a light source in the infrared spectrum (2) with spectrum diffusion in the processing chamber so that the light source is adapted to illuminate the material (10),
- a mat (5) subjected to a magnetic pulse signal from a magnetic pulse generator (6) and adapted to carry the material to be treated,
- a laser source (3) which generates a laser beam directed towards said material carried by the mat at a frequency from 300 Ghz to 100 Thz. The laser source, the light source and the magnetic pulse generator are simultaneously activated for at least a given period of time. (Fig. 1)

## Description

The present invention relates to an apparatus for the treatment of materials.

Chirality is a property which differentiates physical systems into right-handed and left-handed; a physical system has chirality if in a parity transformation, i.e. in a simultaneous flip in the sign of the three spatial coordinates of the physical system, it changes into the physical system with opposite chirality.

Methods for controlling the spin of various materials are known in the art. In fact, the electrical field may be flipped at the level of the electron orbit of some objects to allow the flipping of the orbital spin of the electrons of said subjects. For example, the electron spin in said objects may be flipped from left-handed to right-handed and such a change may be held over time, obtaining a spintronic material. In fact, while in a standard material the number of carriers, i.e. electrons, with spin "up" or "down" is the same, in a spintronic material most or all the electrons have the same spin, i.e. the material has all the electrons with spin "up" or all with spin "down".

It is the object of the present invention to provide a method for the treatment of materials which is different from those known. In particular, the treatment method according to the present invention allows the treated material to become a chiral material after the treatment and an already chiral material to change its chirality after the treatment.

According to the present invention, said object is achieved by an apparatus for the treatment of a material comprising:
- a processing chamber insulated from the external electromagnetic fields and from natural radiations, **characterized in that** said processing chamber comprises therein:
- a light source in the infrared spectrum with spectrum diffusion in the processing chamber, said light source being adapted to illuminate said material,
- a mat subjected to a magnetic pulse signal from a magnetic pulse generator, said mat carrying the material to be treated,
- a laser source which generates a laser beam directed towards said material carried by the mat at a frequency from 300 Ghz to 100 THz, said laser source, said light source and said magnetic pulse generator being simultaneously activated for at least one given period of time.

Still according to the present invention, a method for the treatment of a material may be obtained, which comprises:
- arranging the material to be treated on a mat within a processing chamber insulated from the external electromagnetic fields and from natural radiations, the mat being subjected to a magnetic pulse signal,
- simultaneously irradiating said material with a laser beam at a frequency from 300 Ghz to 100 THz and with a light beam in the infrared spectrum when the mat is subjected to the magnetic pulse signal for at least one given period of time.

The features of the present invention will become more apparent from the following description of an embodiment thereof, made by way of a nonlimiting example with reference to the accompanying drawings, in which:
figure 1 shows a diagram of an apparatus for the treatment of materials according to the present invention;
figure 2 shows the mat used in the apparatus in figure 1.

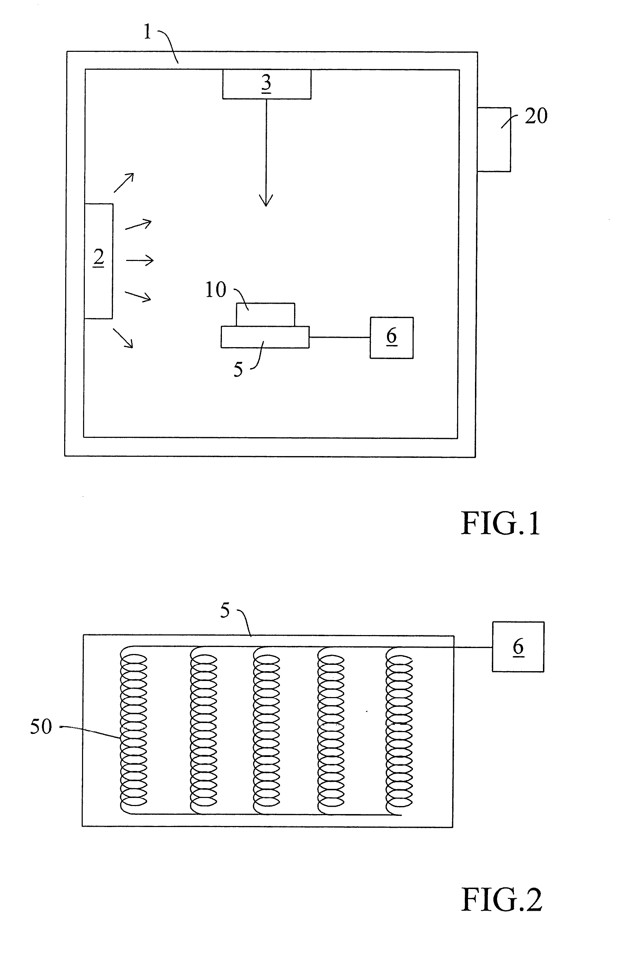

Figure 1 shows a an apparatus for the treatment of materials according to the present invention.

The apparatus comprises a processing chamber 1 which is a chamber insulated from external disturbance sources, in particular from artificial electromagnetic fields and from natural radiations. It must therefore be insulated on the walls, on the floor and on the ceiling by means of a radiation-proof shield. The bearing structure of the processing chamber 1 is preferably made of reinforced concrete, preferably having a thickness of about 30 cm, and preferably a thermoacoustic insulation having a thickness of about 4 cm is applied only to the walls before applying the specific radiation-proof shield. The function of this chamber is not only to insulate the instrumentation within chamber 1 from the exterior, i.e. from the external radiations, but also to prevent the energy activated during and after the execution of the method for treating materials according to present invention from dispersing to the external environment, i.e. the processing chamber 1 must act as an accumulator during the operating steps in accordance with the method according to the invention.

The instruments adapted to carry out the method for treating materials according to the present invention are arranged into the processing chamber 1.

An infrared light source 2, i.e. operating in the infrared spectrum, preferably an infrared lamp 2, may be arranged within the processing chamber 1 in any position, but its location within chamber 1 must ensure the diffusion of the electromagnetic spectrum thereof; the lamp 2 preferably has a power of at least 80 Watt. The specific frequency "range" of the infrared lamp 2 is not important but it is important for it to diffuse its energy within the chamber 1 (a 100 Watt lamp is sufficient for a 15-20 m² surface for a maximum height of 2.70 meters; additional infrared lamps will be added for larger dimensions). For example, a Philips 150 Watt, 230 Volt lamp may be used for a chamber 1 of about 20 m².

A laser source 3 operating in the frequency range between 300 GHz and 400 Thz may be arranged on a side or even on the ceiling of the processing chamber 1, depending on the dimensions and on the features of material 10 to be treated, i.e. any product or even an electronic device. The laser source 3 preferably operates in the frequency band called "far infrared" or FIR (from 300 Ghz to 20 Thz, with a wavelength from 15 micrometers up to 1 mm), as it is capable of obtaining a better result of the treated materials, i.e. it allows most of the electrons belonging to the treated material to have the same spin "up" or "down".

Preferably, the laser source 3 is a semiconductor quantum cascade laser which generates a non-ionizing electromagnetic radiation in terahertz.

A mat or plate 5, preferably made of a composition wherein silver nitrate is present, is arranged within the processing chamber 1 and is subjected to a magnetic pulse signal from a low-intensity magnetic pulse generator 6, the induction of which is in the range from 0.2 to 1 microTesla, preferably from 0.2 to 0.5 microTesla, preferably in radiofrequency. Material 10 to be treated is placed on mat 5. The magnetic pulse signal generator 6 is preferably arranged within the processing chamber 1 and is electrically connected to mat 5; preferably, generator 6 is an electromagnetic pulse generator.

The shape of the magnetic pulse to be applied to material 10 to be treated is not important, any pulse shape, such as "saw-tooth", "square wave", "sinusoidal", "ramp-like", "triangular", allows the same result to be obtained on material 10.

Mat 5 comprises electrical wires 50 therein, preferably in the shape of a coil, which pass through mat 5 over the whole width and length and are connected to generator 6 (Figure 2). For example, it is also possible to use mats manufactured by companies which manufacture or sell equipment provided with appropriate mats or pads connected for transmitting magnetic pulses, already widespread on the market, also in the field of electro-medical products.

The material 10 to be treated is brought into the processing chamber and arranged on mat or plate 5; material 10 may be any type of material, a building material, an electronic device, an agricultural product, etc. Inside the processing chamber 1, the instruments must operate simultaneously and with a given processing time of at least seven consecutive minutes.

Mat or plate 5 is connected to the low-intensity magnetic pulse generator 6.

The laser beam generated by the laser source 3 will directly hit material 10 to be treated arranged on mat 5 connected to the pulse generator 6. The activation of laser 3, pulse generator 6 and infrared lamp 2 must be carried out simultaneously for the treatment of material 10 so that the simultaneous combination between the electromagnetic emissions of the two pieces of equipment and of the lamp leads to the optimal treatment of material 10.

The activation of instruments 2, 3 and 6 is preferably carried out from outside the processing chamber 1, preferably by means of a single button 20.

The treatment of material 10 may also be carried out in the absence of personnel since, once the material 10 to be treated has been arranged, after activating instruments 2, 3 and 6 by means of button 20, the operator can leave the room where the processing chamber 1 is located when treating material 10.

If the treatment of the material continues beyond the predetermined period of time, i.e. seven minutes, this will not negatively affect the material treated. However, this will cause a waste of electric energy since by increasing the treatment time beyond the predetermined time, the treated material will not undergo any improvements or worsening.

An even partial modification of the electron spin of material 10 will be obtained by means of the treatment according to the invention.

If before being treated by means of the method according to the invention, material 10 was a standard material where the number of carriers, i.e. electrons, with spin "up" or "down" is the same, at the end of the treatment method according to the invention the material 10 will have most of the electrons or all of them with the same spin, i.e. all or most of them with spin "up" or all or most of them with spin "down". The possibility of choice, with the consequence of obtaining a chirality with right-handed or left-handed prevalence on the treated material, will depend on the operator's choice: in fact, the magnetic pulse generator 6 emits "wave packets" with a magnetic flow which tends to polarize so as to obtain a final chirality of the material with right-handed prevalence; the generator 6 is also provided with the reverse polarized function (like many other machines that generate pulsed magnetic fields available on the market), so it is sufficient to program the latter to obtain the electron spin modification so that the material chirality as a whole has a left-handed prevalence.

If before being treated by means of the method according to the invention, the material 10 was a spintronic material, i.e. a material where most or all the electrons had the same spin, the result at the end of the treatment method according to the invention will be a material 10 with most or all the electrons (depending on the type of material treated) with a spin opposite to the starting one, i.e. if the material 10 before the treatment according to the invention had most or all the electrons with spin "down", at the end of the treatment according to the invention it will have most or all the electrons with spin "up", i.e. a spin change will be obtained.

Therefore, by means of the treatment method according to the invention, the chirality of material 10 is flipped from right-hand to left-hand or vice versa.

A chiral atomic modification of material 10 is obtained on material 10 by means of the treatment method according to the invention, i.e. a re-polarization of the atomic structures with electron spin orientation so that the positions on the orbits thereof lead to positive results usable in many sectors, in particular in the sanitary field and in the electronics field. The chirality obtained by the specific treatment will not transmit anything which may be harmful to the human being or to all living beings. The treatment on the material allows a re-arrangement of the chemical-physical structure of the material itself to be obtained at an atomic level, the changes of which can be directly observed by using less sophisticated equipment than particle accelerators (vision at a subatomic level of elementary particles), such as for example Fourier transform I.R. spectrophotometers (e.g. the Perkin Elmer product), where the clear difference between two material samples, i.e. the treated one and the untreated one, is already visible at a vibration level.

The spin change capability and its duration over time can be determined from the experiments made, also on the basis of the basic materials considered. Of course, times are adequate to the type of product and to its intended use.

The treatment method according to the invention provides for a long duration of the results on the treated material. The treatment time on material 10 depends on the type of material treated and on the stresses with the related times to which it may be subjected during its lifecycle. Since the product manufacturer will already have tested several types of material, it will indicate its duration over time on each specific technical sheet of the material treated.

The materials treated by means of the treatment method according to the invention are capable of obtaining an improvement of the material usable for preventing the disturbances generated by the artificial electromagnetic fields and/or by the natural radioactivity (in any case, the capabilities will be different and will obviously also depend on the type of basic material used for the treatment), and even an improvement of the products which may also be treated in the agricultural and food field, considering that the treatment does not make a product be considered as a GMO.

## Claims

1. An apparatus for the treatment of a material (10) comprising:
- a processing chamber (1) insulated from the external electromagnetic fields and from natural radiations, **characterized in that** said processing chamber comprises therein:
- a light source in the infrared spectrum (2) with spectrum diffusion in the processing chamber, said light source being adapted to illuminate said material (10),
- a mat (5) subjected to a magnetic pulse signal from a magnetic pulse generator (6), said mat carrying the material to be treated,
- a laser source (3) which generates a laser beam directed towards said material carried by the mat at a frequency from 300 Ghz to 100 THz, said laser source, said light source and said magnetic pulse generator being simultaneously activated for at least one given period of time.

2. An apparatus according to claim 1, **characterized in that** said given period of time is at least of seven minutes.

3. An apparatus according to claim 1, **characterized in that** said magnetic pulse signal has an intensity within a range between 0.2 and 1 microTesla.

4. An apparatus according to claim 3, **characterized in that** said magnetic pulse signal has an intensity within a range between 0.2 and 0.5 microTesla.

5. An apparatus according to claim 1, **characterized in that** said magnetic pulse generator (6) is inside the processing chamber and is electrically connected to the mat (5).

6. An apparatus according to claim 1, **characterized in that** said laser source (3) generates a laser beam directed towards said material carried by the mat at a frequency from 300 Ghz to 20 Thz.

7. An apparatus according to claim 1, **characterized in that** said light source in the infrared spectrum (2) has a power of at least 80 Watt.

8. A method for the treatment of a material (10) comprising:
- arranging the material (10) to be treated on a mat (5) within a processing chamber insulated from the external electromagnetic fields and from natural radiations, the mat being subjected to a magnetic pulse signal,
- simultaneously irradiating said material with a laser beam (3) at a frequency from 300 Ghz to 100 THz and with a light beam in the infrared spectrum (2) when the mat is subjected to the magnetic pulse signal for at least one given period of time.

9. A method according to claim 8, **characterized in that** said given period of time is at least of seven minutes.

10. A method according to claim 8, **characterized in that** said magnetic pulse signal has an intensity in a range from 0.2 to 1 microTesla.

11. A method according to claim 10, **characterized in that** said magnetic pulse signal has an intensity in a range from 0.2 to 0.5 microTesla.

12. A method according to claim 8, **characterized in that** said laser beam (3) is at a frequency from 300 Ghz to 20 Thz.

13. A method according to claim 8, **characterized in that** said magnetic pulse signal comes from a magnetic pulse generator (6) electrically connected to the mat (5).

14. A method according to claim 8, **characterized in that** said light beam in the infrared spectrum comes from a light source (2) having a power of at least 80 Watt.

15. A material treated by the apparatus according to any one of claims 1 to 7.
